# EUROPEAN PATENT SPECIFICATION

(11) **EP 2 475 825 B1**
(45) Date of publication and mention of the grant of the patent: **28.02.2018**
(21) Application number: 10815039.2
(22) Date of filing: 02.09.2010
(51) Int. Cl.: E02D 27/42, F03D 1/00, E04C 5/18, E04H 12/22, F03D 13/20, E04C 5/06

(54) **CONNECTING ELEMENT AND RADIAL REINFORCEMENT STRUCTURE**
VERBINDUNGSELEMENT UND RADIALVERSTÄRKUNGSSTRUKTUR DAFÜR
ÉLÉMENT DE LIAISON ET STRUCTURE D'ARMATURE RADIALE

(30) Priority: 11.09.2009 FI 20095942
(43) Date of publication of application: 18.07.2012
(73) Proprietor: Peikko Group Oy, 15170 Lahti (FI)
(72) Inventor: TUOMINEN, Kari, FI-15140 Lahti (FI)
(74) Representative: Boco IP Oy Ab
(86) International application number: PCT/FI2010/050683
(87) International publication number: WO 2011/029994

(56) References cited:
- EP-A1- 1 526 278
- EP-A1- 1 526 278
- DE-A1- 2 544 657
- DE-A1- 2 544 657

## Description

The invention relates to a connecting element for a radial reinforcement structure of a tower structure, the reinforcement structure comprising main reinforcements extending radially on the same level from the centre toward the edges and connecting reinforcements arranged to bind the main reinforcements relative to each other. The invention further relates to a radial reinforcement structure for a tower structure, the reinforcement structure comprising main reinforcements extending radially on the same level from the centre toward the edges and connecting reinforcements arranged to bind the main reinforcements relative to each other.

In many cases, the tower structures are quite difficult structures in view of their foundation. In this context, tower structures refer to masts, towers and corresponding structures. A particular example of structures with which there are often difficulties are wind power plants, for which today quite high towers need to be built. The high towers of wind power plants are subjected to high loads, whereby high demands are set for the foundations of the towers.

For the above reasons, it is in many cases necessary to design too much reinforcement for tower structure foundations of wind power plants, because the reinforcement is for the sake of its simplicity often made three-dimensional, that is, in the x-y coordinate system. Drawbacks with solutions of this type are high material costs.

Radial reinforcement solutions are also known in the field. An optimal solution in connection with radial reinforcement solutions would be a complete radial reinforcement extending from the centre toward the edges. However, such a reinforcement is difficult to implement. In practice, the difficulties arise from the number of reinforcements. In radial foundation reinforcement, the number of radial reinforcement bars, that is, the main reinforcements, is typically 100 to 200 pieces. The reinforcement bars must be anchored in some way to the opposite sides of the reinforcement centre. In practice, this leads to an impossible situation, because these 100 to 200 pieces would intersect at the same point, that is, at the centre point of the radial reinforcement. Because the reinforcement bars are 10 to 32 mm thick, the layering of the reinforcement bars in the area of the reinforcement centre point would be 200 to 600 mm, which is not possible in practice.

Due to the above reasons, in practical solutions implemented with radial reinforcements, the reinforcement is ended freely before the centre point. The forces are then anchored for instance to the tower of the wind power plant that is partly embedded in concrete. A drawback of such a solution is that both vertical forces of the tower and transverse forces caused by the reinforcement load the tower. This type of situation causes additional stress to the parts of the tower.

Structures described in published US patent 7 155 875, PCT publication WO 2005/015013 A1 and published EP application 1 526 278 A1 are general examples of solutions known in the art. DE 25 44 657 A1 discloses a connecting element for a radial reinforcement structure of a tower structure according to the preamble of claim 1.

The purpose of the invention is to provide a solution, by which the prior-art disadvantages can be eliminated. This is achieved by a connecting element according to claim 1.

An advantage of the invention is above all its simplicity, which makes the adoption and use of the invention advantageous. The invention also provides the advantage that it permits, in practice, an optimal radial reinforcement solution without the intersections of reinforcements in the area of the centre point, which cause difficulties.

The invention will be explained in the following in more detail by means of a working example described in the attached drawing, in which
Figure 1 is a general view of a reinforcement structure of the invention,
Figure 2 is a view of the reinforcement structure of Figure 1 in the direction of arrows A-A,
Figure 3 is a perspective view of a connecting element of the invention in a radial reinforcement structure,
Figure 4 shows the structure of Figures 1 to 3 in connection with a sector view depicting a three-dimensional reinforcement structure, and
Figure 5 shows the structure of Figure 4 in full.

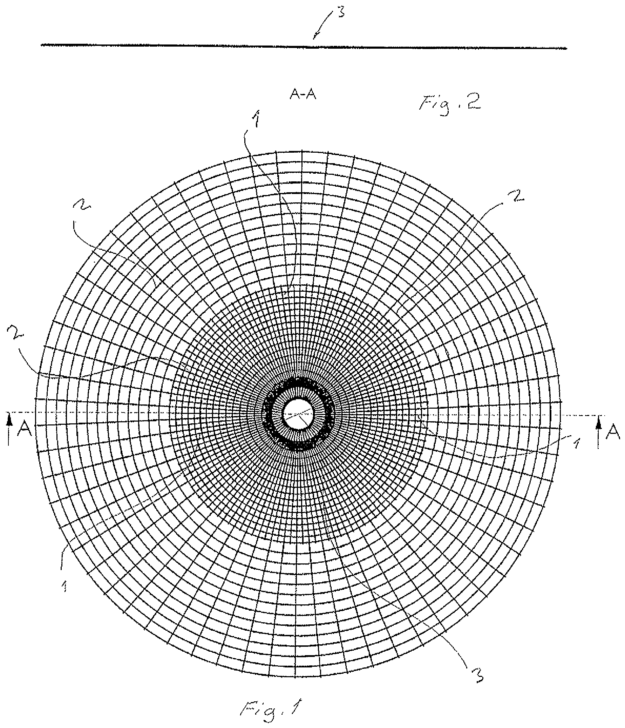

Figures 1 and 2 show a general view of the radial reinforcement structure for a tower structure in accordance with the invention. Figure 1 is a top view of the reinforcement structure and Figure 2 is a view in the direction of arrows A-A.

The tower structure (not shown in Figures 1 and 2) is intended for arrangement in the centre of Figure 1, for instance, so that the reinforcement is radially around the tower. For a person skilled in the art, this is fully conventional technology, wherefore it is not explained in greater detail herein. In this context, reference is made for instance to the publications cited as the prior art.

As shown in Figures 1 and 2, the radial reinforcement structure comprises main reinforcements 1 extending radially on the same level from the centre toward the edges and connecting reinforcements 2 arranged to bind the main reinforcements relative to each other. The connecting reinforcements 2 may be circular elements, for example. Both the main reinforcements 1 and connecting reinforcements 2 are elements made of steel, for instance.

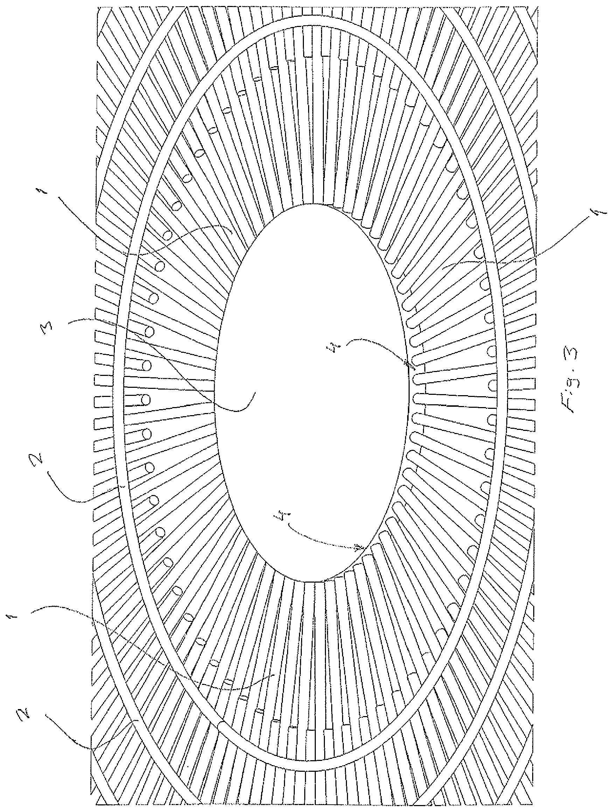

According to an essential idea of the invention, the invention comprises a connecting element that is formed of a centre element 3 arranged at the centre point of the radial reinforcement structure. In the area of the outer edge of the centre element 3 fastening members 4 are made for fastening the inner ends of the radial main reinforcements 1 positioned on the same level to the connecting element. The above-mentioned matters are clearly shown in Figure 3.

The centre element 3 is a round disc.

As shown in Figures 1 to 3, the centre element 3 is arranged to be positioned level with the radial main reinforcements 1. The essential thing is that the fastening members on opposite sides of the centre element are substantially level with each other, whereby forces can transfer via the centre element from one reinforcement bar of the main reinforcement to another reinforcement bar on the opposite side of the centre element and back, in other words, the structure can be anchored on opposite sides of the centre.

The fastening members 4 on the centre element 3 are members with inner threads, in other words, the edge of a round disc has drillings with inner threads and the ends of the reinforcements have corresponding outer threads that are compatible with the inner threads. The centre element 3 is preferably made of steel material.

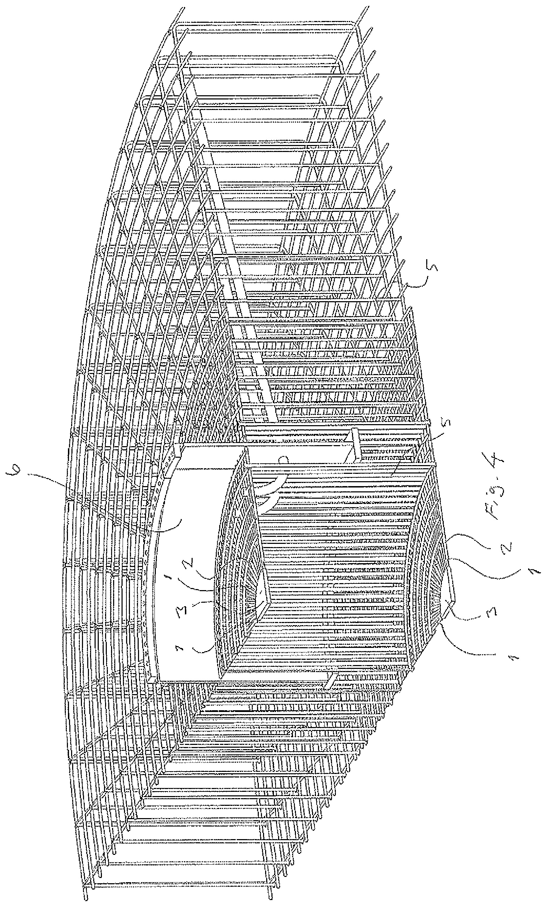

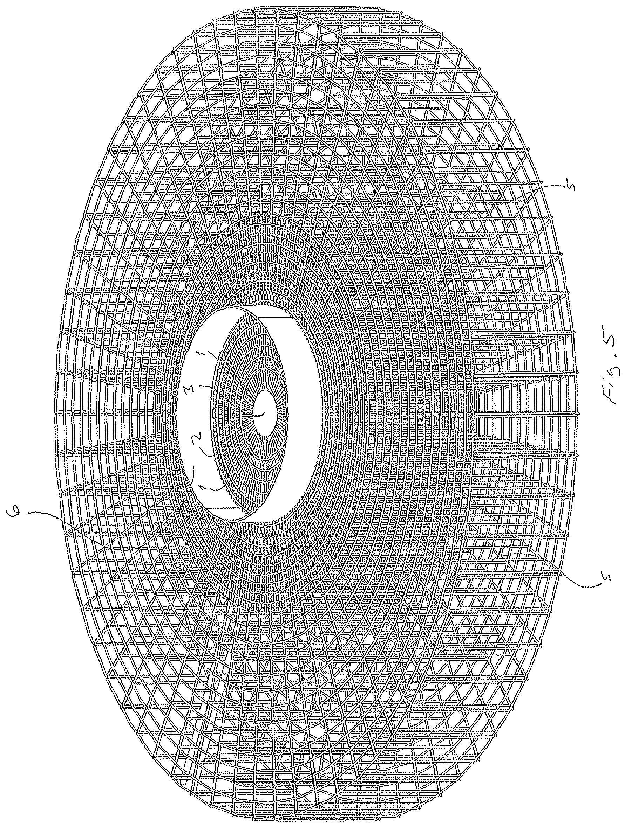

Figures 4 and 5 show a radial reinforcement structure that is made into a three-dimensional structure. The same reference numbers for the corresponding parts are used in Figures 4 to 5 as in Figures 1 to 3. Figure 4 shows a sector of a three-dimensional reinforcement structure and Figure 5 shows the entire reinforcement. Figures 4 and 5 clearly show that the reinforcement structure comprising the centre element 3 fastening the inner ends of the radial main reinforcement 1 positioned on the same level is a tensile reinforcement that is positioned in the area of the top or/and bottom surface structure of the three-dimensional reinforcement structure.

The example of Figures 4 and 5 also contains various vertical reinforcement elements 5. For a person skilled in the art, elements of this type are fully conventional technology, wherefore they are not shown in greater detail herein. The reinforcement structure of Figures 4 and 5, that is, the structure formed of reinforcements 1, 2, 5 is surrounded by concrete in the final structure.

Figures 4 and 5 also show a cylindrical wall element 6 arranged in the area of the centre part of the reinforcement. The bottom part of the above-mentioned cylindrical element is embedded in concrete in the finished structure. The element in question is a part of a tower in a wind power plant. The element transfers forces directed to the tower into the concrete. For a person skilled in the art, this too is fully conventional technology, wherefore it is not shown in greater detail herein.

The examples shown in the figures are not intended to limit the invention in any way, but the invention may be modified freely within the scope of the claims. The example of the figures shows a solution, in which the radial main reinforcement is on one level. However, this is not the only solution, but the main reinforcement may also be on several levels, for instance on two levels, in which case the inner ends of the radial reinforcement located on two levels are fastened to a centre element, for instance to fastening elements located on two levels and arranged on the edge of a round disc.

## Claims

1. A connecting element for a radial reinforcement structure of a tower structure, wherein
the reinforcement structure comprises main reinforcements (1) extending radially on
the same level from the centre toward the edges and connecting reinforcements (2) arranged to bind the main reinforcements relative to each other,
the connecting element is formed of a centre element (3) arranged at the centre point of the radial reinforcement structure,
the centre element (3) is a round disc, the centre element is equipped with fastening members (4) for fastening the inner ends of the radial main reinforcements (1) positioned on the same level to the centre element, and
the centre element (3) is arranged to be positioned level with the radial main reinforcements (1),
**characterised in that**
the fastening members (4) are formed by drillings with inner threads provided in the edge of the centre element (3) and compatible with corresponding outer threads at the ends of the radial main reinforcements (1).

2. A connecting element as claimed in claim 1, **characterised in that** the centre element (3) is made of a steel material.

3. A radial reinforcement structure for a tower structure, the reinforcement structure comprising main reinforcements (1) extending radially on the same level from the centre toward the edges and connecting reinforcements (2) arranged to bind the main reinforcements relative to each other, **characterised in that** radial reinforcement structure comprises a connecting element according to any one of claims 1 to 2 arranged at the centre point of the reinforcement structure.

4. A radial reinforcement structure as claimed in claim 3, arranged as a three-dimensional structure, **characterised in that** the reinforcement structure comprising the centre element (3) fastening the inner ends of the radial main reinforcement positioned on the same level is positioned in the area of the top or/and bottom surface structure of the three-dimensional reinforcement structure.

## Patentansprüche

1. Verbindungselement für eine radiale Bewehrungsstruktur einer Turmstruktur,
wobei die Bewehrungsstruktur umfasst: Hauptbewehrungen (1), die sich radial auf der gleichen Ebene von der Mitte zu den Rändern erstrecken, und Verbindungsbewehrungen (2), die eingerichtet sind, um die Hauptbewehrungen im Verhältnis zueinander zu binden,
das Verbindungselement aus einem zentralen Element (3) gebildet ist, das am Mittelpunkt der radialen Bewehrungsstruktur angeordnet ist,
das zentrale Element (3) eine runde Scheibe ist,
das zentrale Element mit Befestigungsgliedern (4) ausgerüstet ist, um die inneren Enden der auf der gleichen Ebene positionierten radialen Hauptbewehrungen (1) am zentralen Element zu befestigen, und
das zentrale Element (3) eingerichtet ist, um auf einer Ebene mit den radialen Hauptbewehrungen (1) positioniert zu werden,
**dadurch gekennzeichnet, dass**
die Befestigungsglieder (4) durch Bohrungen mit Innengewinden gebildet werden, die im Rand des zentralen Elements (3) vorgesehen sind und mit entsprechenden Außengewinden an den Enden der radialen Hauptbewehrungen (1) kompatibel sind.

2. Verbindungselement nach Anspruch 1, **dadurch gekennzeichnet, dass** das zentrale Element (3) aus einem Stahlmaterial gefertigt ist.

3. Radiale Bewehrungsstruktur für eine Turmstruktur, wobei die Bewehrungsstruktur umfasst: Hauptbewehrungen (1), die sich radial auf der gleichen Ebene von der Mitte zu den Rändern erstrecken, und Verbindungsbewehrungen (2), die eingerichtet sind, um die Hauptbewehrungen im Verhältnis zueinander zu binden, **dadurch gekennzeichnet, dass** die radiale Bewehrungsstruktur ein Verbindungselement nach einem der Ansprüche 1 bis 2 umfasst, das am Mittelpunkt der Bewehrungsstruktur angeordnet ist.

4. Radiale Bewehrungsstruktur nach Anspruch 3, eingerichtet als dreidimensionale Struktur, **dadurch gekennzeichnet, dass** die Bewehrungsstruktur, die das zentrale Element (3) umfasst, das die inneren Enden der auf der gleichen Ebene positionierten radialen Hauptbewehrung befestigt, im Bereich der oberen oder/und unteren Oberflächenstruktur der dreidimensionalen Bewehrungsstruktur positioniert ist.

## Revendications

1. Élément de liaison pour une structure d'armature radiale d'une structure de tour, ladite structure d'armature comprenant des armatures principales (1) s'étendant de manière radiale dans un même plan depuis le centre jusqu'aux bords et des armatures de liaison (2) agencées de manière à relier entre elles les armatures principales,
ledit élément de liaison étant constitué d'un élément central (3) agencé au point central de la structure d'armature radiale,
ledit élément central (3) étant un disque rond,
ledit élément central étant équipé d'éléments de fixation (4) pour fixer à l'élément central les extrémités intérieures des armatures principales radiales (1) positionnées dans un même plan et
ledit élément central (3) étant agencé de manière à être positionné à niveau avec les armatures principales radiales (1),
**caractérisé en ce que**
lesdits éléments de fixation (4) sont formés par des trous avec des filets intérieurs prévus dans le bord de l'élément central (3) et compatibles avec des filets extérieurs correspondants prévus aux extrémités des armatures principales radiales (1).

2. Élément de liaison selon la revendication 1, **caractérisé en ce que** ledit élément central (3) est fait d'un matériau d'acier.

3. Structure d'armature radiale pour une structure de tour, ladite structure d'armature comprenant des armatures principales (1) s'étendant de manière radiale dans un même plan depuis le centre jusqu'aux bords et des armatures de liaison (2) agencées de manière à relier entre elles les armatures principales, **caractérisée en ce que** ladite structure d'armature radiale comprend un élément de liaison selon l'une des revendications 1 à 2 disposé au point central de structure d'armature.

4. Structure d'armature radiale selon la revendication 3, agencée en structure tridimensionnelle, **caractérisée en ce que** ladite structure d'armature comprenant l'élément central (3) fixant les extrémités intérieures de l'armature principale radiale positionnées dans un même plan est positionnée dans la zone de la structure de surface supérieure ou/et inférieure de la structure d'armature tridimensionnelle.
